(19) Europäisches Patentamt

European Patent Office

Office européen des brevets

(11) **EP 2 637 237 A1**

(12) **EUROPEAN PATENT APPLICATION**
published in accordance with Art. 153(4) EPC

(43) Date of publication:
**11.09.2013 Bulletin 2013/37**

(51) Int Cl.:
***H01M 4/04*** (2006.01)   ***H01M 4/139*** (2010.01)

(21) Application number: **10859239.5**

(22) Date of filing: **02.11.2010**

(86) International application number:
**PCT/JP2010/069519**

(87) International publication number:
**WO 2012/059982 (10.05.2012 Gazette 2012/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **SUZUKI, Shigeru Toyota-shi, Aichi 471-8571 (JP)**

(74) Representative: **TBK Bavariaring 4-6 80336 München (DE)**

(54) **COATING METHOD AND COATING APPARATUS**

(57)    In a coating apparatus 100 provided by the present invention an electrode material paste 12 is coated onto an elongated collector 10, to form thereby a coating film 14 of predetermined width in the longitudinal direction of the collector. The coating apparatus 100 includes: a discharge nozzle 20 that discharges the paste 12 onto the collector 10, which is an object to be coated; a transport pipe 30 that transports the paste 12 up to the discharge nozzle 20; a viscosity measurement unit 40 that measures the viscosity of the paste 12 that is transported within the transport pipe 30; and a gap control unit 50 that modifies a size H of the clearance between the discharge nozzle 20 and the collector 10 on the basis of the viscosity measured by the viscosity measurement unit 40.

FIG.5

## Description

## Technical Field

The present invention relates to a coating method and to a coating apparatus. More particularly, the present invention relates to a coating method and a coating apparatus by which an electrode material paste is coated onto an elongated collector, to form thereby a coating film of predetermined width in the longitudinal direction of the collector.

## Background Art

Recent years have witnessed the growing importance of secondary batteries, for instance lithium ion batteries, as vehicle-mounted power sources, and as power sources that are provided in, for instance, personal computers and portable terminals. In particular, lithium secondary batteries that are lightweight and afford high energy density are expected to be used as preferred high-output power sources installed in vehicles. In a typical configuration, such lithium secondary batteries comprise electrodes wherein a material that is capable of reversibly storing and releasing lithium ions (electrode active material) is formed on a conductive member (electrode collector). Examples of positive electrode active materials that are used in positive electrodes include, for instance, oxides having lithium and one or more transition metal elements as constituent metal elements. Examples of electrode collectors that are used in the positive electrode (hereafter also referred to as "positive electrode collector") include, for instance, elongated sheet-shaped members having aluminum or an aluminum alloy as a main constituent. Such electrodes for batteries can be produced, for instance, by preparing an active material paste through dispersion and kneading of an active material in an appropriate solvent (for instance, water), and by coating the active material paste onto the collector, followed by drying.

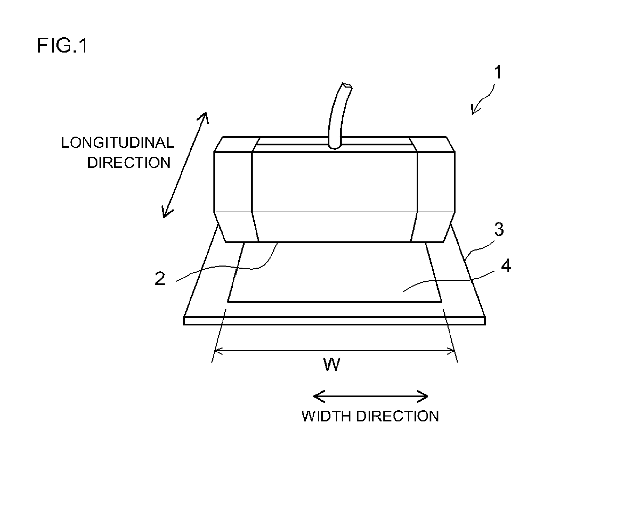

For instance, a die-type coating apparatus is used as the coating apparatus for coating such an active material paste onto the elongated collector. As illustrated in FIG. 1, a die-coating apparatus has a discharge nozzle 1, and, within the discharge nozzle 1, is provided with a manifold (liquid reservoir) for spreading in a width direction the paste, which is supplied from outside, and with a lip opening 2 through which the paste is extruded out of the manifold. The paste supplied from outside is spread in the width direction at the manifold of the discharge nozzle 1, and is extruded through the lip opening 2, as a result of which the paste becomes coated onto the collector 3. Herein, the discharge nozzle 1 and the collector 3 are caused to move relatively to each other with a predetermined spacing kept therebetween. As a result, a coating film 4 of a predetermined width W becomes formed on the surface of the collector 3, in the longitudinal direction of the latter. Patent Literatures 1 to 7 are exemplary literatures relating to viscosity measurement of such pastes.

Citation List

Patent Literature

Patent Literature 1: Japanese Patent Application Publication No. 2009-187819
Patent Literature 2: Japanese Patent Application Publication No. S62-194441
Patent Literature 3: Japanese Patent Application Publication No. H06-074887
Patent Literature 4: Japanese Patent Application Publication No. H06-094593
Patent Literature 5: Japanese Patent Application Publication No. S64-026124
Patent Literature 6: Japanese Patent Application Publication No. 2000-348710
Patent Literature 7: Japanese Patent Application Publication No. 2005-243581

## Summary of Invention

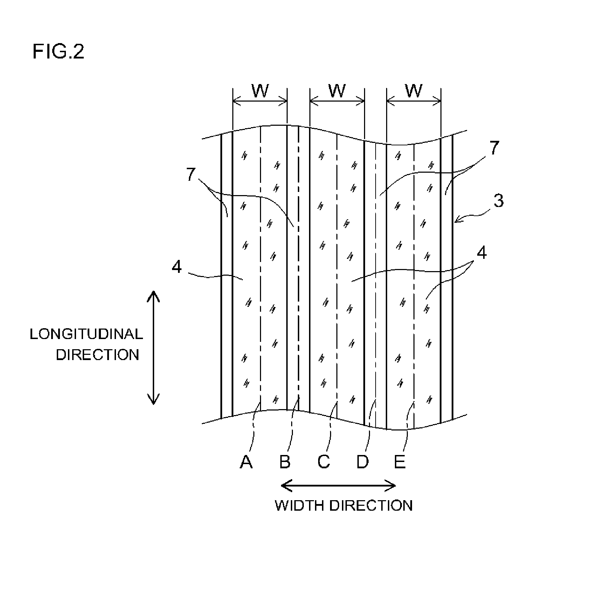

As described above, a positive electrode and a negative electrode are ordinarily formed through coating of a collector with a battery material paste. In a battery for vehicle drive, for instance, three coating film (electrode layer) rows are formed (stripe coating), in the longitudinal direction of one elongated collector, with a predetermined spacing between rows and with slits A to E being formed at the center of the coating films and between the coating films, as illustrated in FIG. 2. Six sheet-like electrodes are then produced by cutting the elongated collector along the slits A to E. An electrode lead terminal is welded to an uncoated portion 7 of the coating film (electrode layer) 4, to elicit electric connection to the electrode terminal. In such a case, a proper arrangement of the cutting margin, at which the slits A to E are formed, and of the uncoated portion 7 of the coating film 4 is important in terms of improving yield. Accordingly, it is necessary to form the coating film 4 with a uniform width W in the transversal direction.

However, when producing an electrode for batteries using such a coating apparatus, a problem arose in that the width W of the coating film 4 in the transversal direction fluctuates during the operation of the apparatus, and it was not possible to form a coating film 4 of uniform coating width. In the light of the above, it is an object of the present invention to provide a coating method that allows suppressing fluctuation of the width of a coating film in the transversal direction, and that allows forming a coating film of uniform coating width. A further object is to provide a coating apparatus in which the above- described excellent coating method can be carried out easily and reliably.

As a result of diligent research into the causes of fluctuation of the width W of the coating film 4 in the transversal direction, during the operation of the apparatus, the inventors arrive at the following findings.

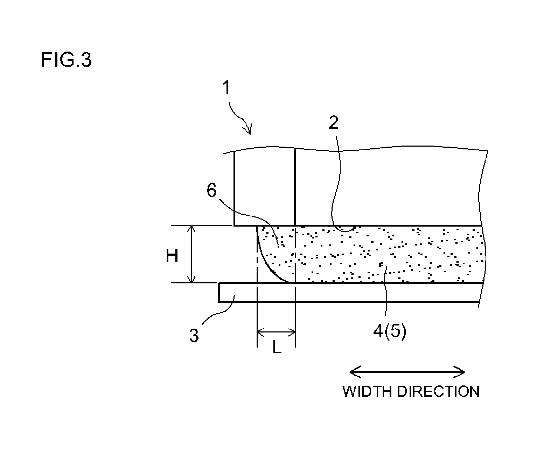

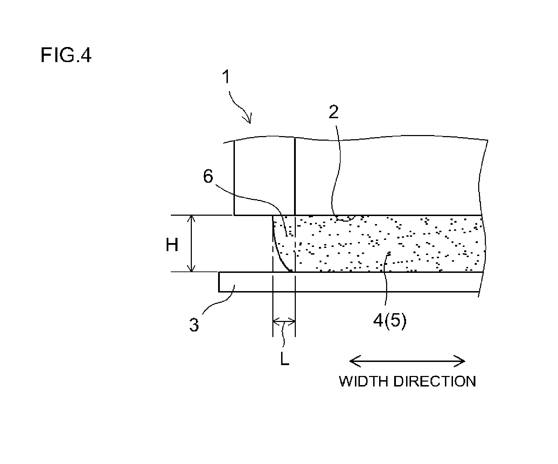

Specifically, the state of a battery material paste varies constantly depending on the environment (temperature, humidity and the like) during coating, and thus viscosity fluctuates to some degree. As illustrated in FIG. 3, in a case where paste viscosity is comparatively low, a paste 5 that is discharged out of the lip opening 2, flows out of the lip opening, in the width direction, and a liquid spread 6 forms at a gap between the discharge nozzle 1 and the collector 3. By contrast, when the paste viscosity is comparatively high, the paste 5 that is discharged from the lip opening 2 does not readily flow outward in the width direction of the lip opening 2, and the liquid spread 6 is curtailed at the abovementioned gap, as illustrated in FIG. 4. The size of such a liquid spread length L may constitute a cause of fluctuation of the coating width of the coating film 4.

The inventors found that it becomes possible to prevent fluctuations in the coating width, caused by changes in viscosity of the paste during the operation of the apparatus, by performing control so as to keep constant the liquid spread 6 (liquid spread length L) that arises at the gap between the discharge nozzle 1 and the collector 3, even if the viscosity of the paste fluctuates during the operation of the apparatus, as described above, specifically by performing control that involves modifying the size H of the clearance between the discharge nozzle 1 and the collector 3 in accordance with paste viscosity. The present invention was thus arrived at on the basis of that finding.

The coating method provided by the present invention is a method for coating an electrode material paste onto an elongated collector, to form thereby a coating film of predetermined width in the longitudinal direction of the collector. This coating method involves arranging a viscometer halfway a transport pipe through which the paste is transported to a discharge nozzle, and modifying the size of the clearance (hereafter also referred to as coating gap amount) between the discharge nozzle and the collector on the basis of the viscosity of the paste measured by the viscometer, to adjust thereby the width of the coating film that is coated onto the collector.

In the coating method of the present invention, a viscometer is disposed halfway the transport pipe that transports the paste to the discharge nozzle, and the viscosity of the paste that is supplied to the discharge nozzle can be grasped on-line. Therefore, the size of the clearance between the discharge nozzle and the collector can be properly modified in accordance with that viscosity. For instance, in a case where the measured paste viscosity is lower than the required viscosity, the paste 5 discharged out of the lip opening 2 of the discharge nozzle 1 flows outward in the width direction of the lip opening 2, as illustrated in FIG. 3, such that a substantial liquid spread 6 arises at the gap between the discharge nozzle 1 and the collector 3. In such a case, the size (coating gap amount) H of the clearance between the discharge nozzle 1 and the collector 3 is widened in such a manner that there decreases the liquid spread 6 at the abovementioned gap (in such a manner that the liquid spread length L takes on a target value). By contrast, in a case where the measured paste viscosity is higher than the required viscosity, the paste 5 discharged out of the lip opening 2 of the discharge nozzle 1 flows less readily outward in the width direction of the lip opening 2, as illustrated in FIG. 4, and the liquid spread 6 is curtailed at the abovementioned gap. In such a case, the size (coating gap amount) H of the clearance between the discharge nozzle 1 and the collector 3 is narrowed in such a manner that there increases the liquid spread 6 at the abovementioned gap (in such a manner that the liquid spread length L takes on a target value).

The viscosity of the paste halfway the transport pipe that transports the paste 5 to the discharge nozzle 1 is grasped, and the size H of the clearance between the discharge nozzle 1 and the collector 3 is properly modified in accordance with the viscosity, so that, as a result, the liquid spread 6 (liquid spread length L) at the gap between the discharge nozzle 1 and the collector 3 is kept constant (target value). In consequence, this allows forming a coating film of uniform width on the collector, even if paste viscosity fluctuates during the operation of the apparatus. Accordingly, the present invention allows coating the paste onto the collector surface to a given target coating width at all times, from start to finish of paste coating, and allows producing optimally an electrode sheet having a coating film of a good electrode material formed therein.

In a preferred mode of the coating method disclosed herein, the shear rate of the paste transported within the transport pipe is caused to vary, and the viscosity of the paste is measured at each shear rate. In this case, it becomes possible to properly grasp the viscosity of the paste in accordance with the shear rate, even if the paste that is transported within the transport pipe is a fluid, such as a non-Newtonian fluid, the viscosity whereof changes depending on the flow rate (shear rate), and it becomes possible to modify, with good precision, the size H of the clearance between the discharge nozzle and the collector.

In a preferred mode of the coating method disclosed herein, at least three transport sites having mutually dissimilar inner diameters, such that the shear rates of the paste are mutually dissimilar, are provided halfway the transport pipe through which the paste is transported to the discharge nozzle, and the viscosity of the paste at the shear rate of each transport site is measured at each of the at least three transport sites. In this case, the viscosity of the paste at the shear rate of the respective transport site can be measured at each of the at least three transport sites.

In a preferred mode of the coating method disclosed herein, a power approximation curve is worked out from the viscosity of the paste measured at each shear rate, and values of zero shear viscosity $\eta_0$ and a viscosity index n are extracted on the basis of Expression (1):

[Math. 1]

$$\eta = \eta_0 \, \gamma^{(n-1)} \quad \cdots \quad (1)$$

where

$\eta$: paste viscosity;

$\eta_0$: zero shear viscosity;

n: viscosity index; and

$\gamma$: shear rate.

In this case, it becomes possible to easily determine the coating gap amount (size of the clearance between the discharge nozzle and the collector) H for achieving the target liquid spread length L, on the basis of the extracted values of the zero shear viscosity $\eta_0$ and the viscosity index n. Although explained in more detail below, the relationship between the zero shear viscosity $\eta_0$, the viscosity index n, the coating gap amount H and the liquid spread length L is given by Expression (2) below. Accordingly, the viscosity of the paste supplied to the discharge nozzle is measured on-line, the zero shear viscosity $\eta_0$ and the viscosity index n are worked out from the measured viscosity, and the coating gap amount H (for instance, $H_0$) for obtaining a target liquid spread length $L_0$ is calculated on the basis of the equation of Expression (2). The coating gap amount for obtaining the target liquid spread length $L_0$ is properly adjusted as a result.

[Math. 2]

$$L = \frac{H \cdot \Delta P}{2 \, \eta_0} \left( \frac{n}{2 \, n + 1} \cdot \frac{H}{u} \right)^n \quad \cdots \quad (2)$$

where

$\eta_0$: zero shear viscosity

n: viscosity index

H: size of the clearance between the discharge nozzle and the collector

L: liquid spread length in coating width

$\Delta P$: lip section pressure (arbitrary constant determined by coating conditions)

u: travel speed of the collector (arbitrary constant determined by coating conditions)

If the viscosity of the paste fluctuates during the operation of the apparatus, the zero shear viscosity $\eta_0$ and the viscosity index n fluctuate accordingly as well. In such a case, there is calculated the coating gap amount (H0→H1) to be modified on the basis of the equation of Expression (2) described above, from the values of the zero shear viscosity $\eta_0$ and the viscosity index n after fluctuation. That is, even if the viscosity of the paste fluctuates during the operation of the apparatus, the viscosity of the paste that is supplied to the discharge nozzle is grasped constantly on-line. Therefore, the coating gap amount H for obtaining the target liquid spread length $L_0$ is calculated by tracking changes in viscosity in accordance with the grasped viscosity. The coating gap amount for obtaining the target liquid spread length $L_0$ is properly modified as a result.

In the present invention, thus, the coating gap amount for obtaining the target coating width (liquid spread length L) is properly adjusted on the basis of the equation of Expression (2) above, while under constant monitoring of the viscosity of the paste during the operation of the apparatus. As a result, the paste can be properly applied by varying the coating gap amount H in such a way so as to achieve the target coating width, even if the viscosity of the paste fluctuates during the operation of the apparatus. Therefore, the present invention makes it possible to form stably a coating film of uniform coating width, even if the viscosity of the paste fluctuates during the operation of the apparatus.

The present invention provides a coating apparatus in which the abovementioned coating method can be easily and reliably carried out. The coating apparatus is a coating apparatus in for coating an electrode material paste onto an elongated collector and thereby forming a coating film of predetermined width in a longitudinal direction of the collector, this apparatus including: a discharge nozzle that discharges the paste onto the collector, which is an object to be coated;

a transport pipe that is connected to the discharge nozzle and transports the paste up to the discharge nozzle; a viscosity measurement unit that is provided halfway the transport pipe and measures the viscosity of the paste that is transported through the interior of the transport pipe; and a gap control unit that is electrically connected to the viscosity measurement unit and modifies assize of a clearance between the discharge nozzle and the collector on the basis of the viscosity measured by the viscosity measurement unit. Preferably, the gap control unit is configured to be capable of adjusting the width of the coating film that is coated onto the collector by modifying the size of a clearance between the discharge nozzle and the collector.

Such a coating apparatus allows coating the paste onto the collector surface to a given target coating width at all times, from start to finish of paste coating, even if the viscosity of the paste fluctuates during the operation of the apparatus.

In a preferred mode of the coating apparatus disclosed herein, the viscosity measurement unit is configured to be capable of varying a shear rate of the paste that is transported within the transport pipe, and of measuring the viscosity of the paste at each shear rate.

In a preferred mode of the coating apparatus disclosed herein, the transport pipe is provided with at least three transport sites having mutually dissimilar inner diameters such that the shear rates of the paste are mutually dissimilar, and the viscosity measurement unit is configured so as to measure the viscosity of the paste at the shear rate of each transport site by using respective viscometers disposed at the at least three transport sites.

In a preferred mode of the coating apparatus disclosed herein, the gap control unit is configured to be capable of working out a power approximation curve from the viscosity of the paste measured at each shear rate, and extracting values of zero shear viscosity $\eta_0$ and a viscosity index n on the basis of Expression (1) above.

In a preferred mode of the coating apparatus disclosed herein, the gap control unit is configured to be capable of determining a size H of a clearance between the discharge nozzle and the collector, from the extracted values of the zero shear viscosity $\eta_0$ and the viscosity index n, on the basis of the equation of Expression (2) above.

The present invention provides a method for producing an electrode for secondary batteries that is provided with an elongated collector and an electrode layer that is formed on the elongated collector, in a longitudinal direction. The method for producing an electrode for secondary batteries includes: a step of coating an electrode material paste for forming the electrode layer onto the elongated collector, in the longitudinal direction, out of a predetermined discharge nozzle; and a step of drying the coating film applied in the longitudinal direction, thereby forming the electrode layer on the collector, in the longitudinal direction. Herein, the coating process is carried out in accordance with any one of the coating methods described above.

The method for producing the electrode for secondary batteries allows forming an electrode layer (coating film) of uniform thickness (with good precision) on an elongated collector, even if the viscosity of the electrode material paste fluctuates during the operation of the apparatus. For instance, three coating film (electrode layer) rows are formed (stripe coating) in the longitudinal direction of one elongated collector, with a predetermined spacing between rows and with slits A to E being formed at the center of the coating films and between the coating films, as illustrated in FIG. 2. Six sheet-like electrodes are then produced by cutting the elongated collector along the slits A to E. In such a case, the production method of the present invention allows forming an electrode layer (coating film) uniformly (with good precision) on the elongated collector. Accordingly, the uncoated portions of the electrode layer and the cutting margin for forming the slits A to E can be properly provided, while yield can also be improved. As a result, it becomes possible to reduce the amount of waste, to elicit improvements with very high efficiency in terms, for instance, of material cost and material utilization, and to reduce material costs.

**Brief Description of Drawings**

FIG. 1 is a schematic diagram illustrating schematically the configuration of a discharge nozzle 1;

FIG. 2 is a plan-view diagram illustrating an intermediate in the production of an electrode sheet;

FIG. 3 is a schematic diagram for explaining a relationship between paste viscosity and liquid spread in the coating width;

FIG. 4 is a schematic diagram for explaining a relationship between paste viscosity and liquid spread in the coating width;

FIG. 5 is a schematic diagram illustrating schematically a coating apparatus according to an embodiment of the present invention;

FIG. 6 is a schematic diagram illustrating schematically a viscosity measurement unit according to an embodiment of the present invention;

FIGS. 7(a) and 7(b) are schematic diagrams for explaining a relationship between coating gap amount and liquid spread amount in an embodiment of the present invention;

FIGS. 8(a) and 8(b) are schematic diagrams for explaining a relationship between coating gap amount and liquid spread amount in an embodiment of the present invention;

FIG. 9 is a graph illustrating a relationship between paste viscosity η and a liquid spread length L of coating width;

FIG. 10 is a graph illustrating a relationship between a coating gap amount H and a liquid spread length L of coating width;

FIG. 11 is a graph illustrating a relationship between shear rate and paste viscosity;

FIG. 12 is a graph illustrating a relationship between shear rate and paste viscosity;

FIG. 13 is a top-view schematic diagram illustrating a positional relationship between a discharge nozzle, a collector and a coating film;

FIG. 14 is a cross-sectional diagram illustrating a cross-section a-a of FIG. 13;

FIG. 15 is a schematic diagram for explaining pressure flow and shear flow that occur in liquid spread;

FIG. 16 is a schematic diagram for explaining a wound electrode body according to an embodiment of the present invention; and

FIG. 17 is a schematic diagram for explaining a secondary battery according to an embodiment of the present invention.

## Description of Embodiments

Preferred embodiments of the present invention are explained next with reference to accompanying drawings. Any features other than the features specifically set forth in the present description and which may be necessary for carrying out the present invention can be regarded as instances of design matter for a person skilled in the art on the basis of known techniques in the technical field in question. The present invention can be carried out thus on the basis of the features disclosed in the present description and on the basis of common technical knowledge in the relevant technical field. The embodiments below are mere illustrations of modes for carrying out the invention, and the latter is not limited in any way to the below-described embodiments.

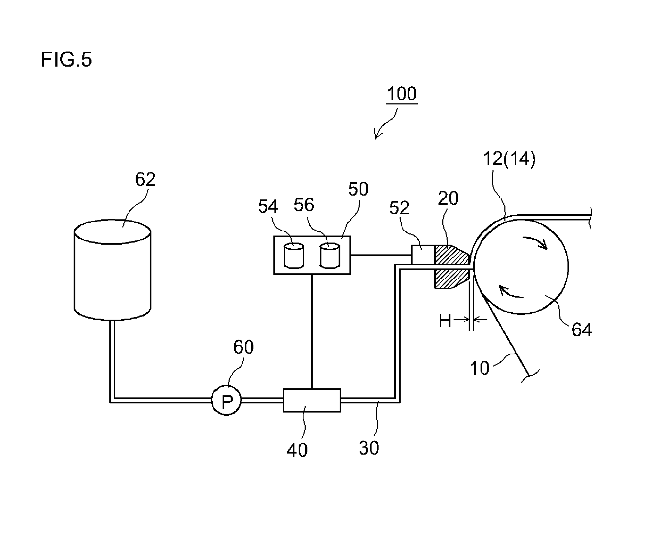

FIG. 5 is a schematic diagram illustrating schematically a coating apparatus 100 according to the present embodiment. As illustrated in FIG. 5, the coating apparatus 100 according to the present embodiment is a coating apparatus for forming a coating film 14 of a predetermined width through coating a collector 10 with a paste 12 for an electrode material. The coating apparatus 100 comprises: a discharge nozzle 20; a transport pipe 30 connected to the discharge nozzle 20; a viscosity measurement unit 40 provided halfway the transport pipe 30; and a gap control unit 50 electrically connected to the viscosity measurement unit 40.

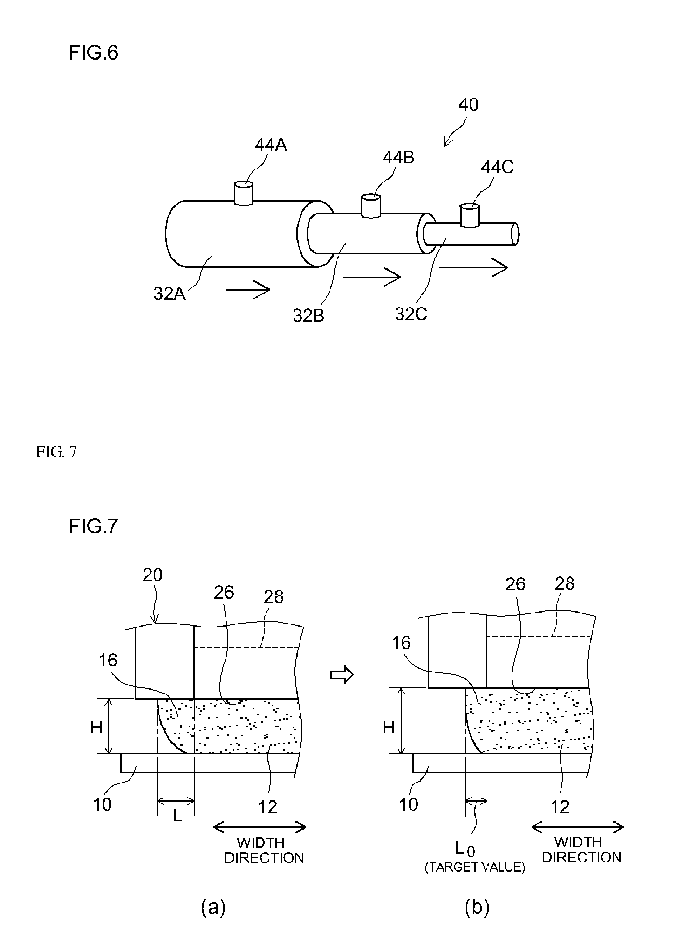

The discharge nozzle 20 discharges the paste 12 onto the collector 10, which is the object to be coated. The discharge nozzle 20 discharges, onto the surface of the elongated collector 10, the paste 12 that is transported from a supply tank 62 by a pump 60 that is disposed upstream. The discharge nozzle 20 implements the discharge onto the elongated collector 10 that travels by being wound on a coating roll 64. In the present embodiment, the discharge nozzle 20 is a die head. FIG. 7(a) illustrates schematically a relevant-portion front-view diagram. The die head 20 comprises a manifold (liquid reservoir) 28 and a lip opening 26. The paste 12 that is supplied from the transport pipe spreads in the width direction in the manifold 28, and is extruded from the lip opening 26, to be coated as a result onto the collector 10. Herein, a coating film of a predetermined width can be formed on the surface of the collector 10 by causing the die head (discharge nozzle) 20 and the collector 10 to move while keeping a predetermined spacing H therebetween.

As illustrated in FIG. 5, a driving mechanism (for instance, a servomotor) 52 is attached to the discharge nozzle (die head) 20. The driving mechanism 52 is driven, and the discharge nozzle 20 is displaced thereby in a predetermined direction (left-right direction in FIG. 5), so that the size (coating gap amount) H of the clearance between the discharge nozzle 20 and the collector 10 is regulated as a result.

The transport pipe 30, which is connected to the discharge nozzle 20 and a pump 60, transports the paste 12, fed out of the supply tank 62 by the pump 60, up to the discharge nozzle 20. A known conventional transport pipe can be used as the transport pipe 30, without any particular limitations. The purpose of the pump 60 is to feed the paste 12 held in the supply tank 62 to the downstream die head 20, via the transport pipe 30. The coating roll 64 is rotationally driven, in one direction, by a motor not shown. The elongated collector 10 is caused to travel towards the discharge nozzle 20 as a result.

The viscosity measurement unit 40, which is provided halfway the transport pipe 30, is used in order to measure the viscosity of the paste 12 that is transported within the transport pipe 30. In the present embodiment, the viscosity measurement unit 40 is configured in such a manner that the shear rate (flow rate) of the paste 12 transported within the transport pipe 30 can be modified, and the viscosity of the paste 12 can be measured at each shear rate. In the present embodiment, three transport sites 32A, 32B, 32C having mutually dissimilar inner diameters such that the shear rates of the paste are dissimilar, are sequentially provided in series such that the inner diameters thereof become sequentially smaller downstream, on the transport pipe 30, as illustrated in FIG. 6. The viscosity measurement unit 40 is configured in such a way so as to measure the viscosity of the paste, at the shear rates of the respective three transport sites 32A, 32B, 32C, by way of viscometers 44A, 44B, 44C that are respectively disposed at each of the transport sites 32A, 32B, 32C. Conventionally known vibratory viscometers can be used, without any particular limitations, as the vibratory viscometers.

Thus, the three transport sites 32A, 32B, 32C are connected in series and the inner diameter of the transport sites 32A, 32B, 32C is caused to vary, to change thereby the flow rate (shear rate) of the paste 12 that is transported within the transport sites 32A, 32B, 32C. As a result, it becomes possible to properly grasp the viscosity of the paste in accordance with the shear rate, even if the paste 12 that is transported within the transport pipe 30 is a fluid, such as a non- Newtonian fluid, the viscosity whereof changes depending on the flow rate (shear rate) .

The viscosity measurement unit 40 is electrically connected to the gap control unit 50. The gap control unit 50 comprises a computer. The gap control unit 50 is configured so as to vary the size (coating gap amount) H of the clearance between the discharge nozzle 20 and the collector 10, on the basis of the viscosity of the paste that is measured by the viscosity measurement unit 40.

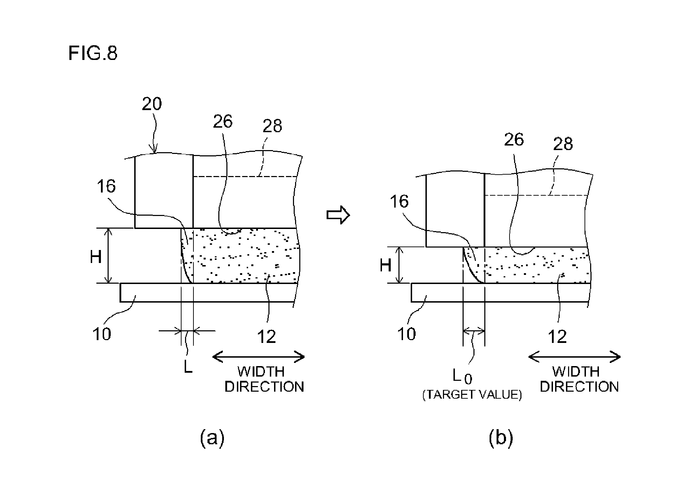

For instance, in a case where the viscosity of the paste measured by the viscosity measurement unit 40 is lower than the required viscosity, the paste 12 discharged out of the lip opening 26 of the discharge nozzle (die head) 20 flows outward in the width direction of the lip opening 26, as illustrated in FIG. 7(a), and liquid spread 16 occurs mostly in the gap between the discharge nozzle 20 and the collector 10. In such a case, gap control unit 50 widens the size (coating gap amount) H of the clearance between the discharge nozzle 20 and the collector 10 in such a manner that the liquid spread 16 at the above-described gap becomes smaller (such that the liquid spread length L takes on a target value $L_0$), as illustrated in FIG. 7(b). If the viscosity of the paste measured by the viscosity measurement unit 40 is higher than the required viscosity, the paste 12 discharged from lip opening 26 of the discharge nozzle (die head) 20 flows less readily outward in the width direction of the lip opening 26, as illustrated in FIG. 8(a), and the liquid spread 16 is curtailed at the abovementioned gap. In such a case, the gap control unit 50 narrows the size (coating gap amount) H of the clearance between the discharge nozzle 20 and the collector 10 in such a manner that the liquid spread 16 of the abovementioned gap increases (in such a manner that the liquid spread length L takes on the target value $L_0$), as illustrated in FIG. 8(b).

Thus, the viscosity of the paste halfway the transport pipe 30 that transports the paste 12 to the discharge nozzle (die head) 20 is grasped, and the size H of the clearance between the discharge nozzle 20 and the collector 10 is properly modified in accordance with the viscosity, so that, as a result, the liquid spread 16 (liquid spread length L) at the gap between the discharge nozzle (die head) 20 and the collector 10 is kept constant (target value $L_0$) . It becomes therefore possible to form stably a coating film of uniform coating width, even if the viscosity of the paste fluctuates during the operation of the apparatus. Therefore, the above configuration allows coating the paste onto the collector surface to a given target coating width at all times, from start to finish of paste coating, and allows producing optimally an electrode for batteries having a coating film (electrode layer) of a good electrode material formed therein.

Control of the gap control unit 50 is explained next with reference to FIG. 5. The gap control unit 50 comprises a computing unit (for instance, a CPU) 54 and a storage unit (for instance, HDD) 56. The computing unit 54 can execute programs stored in the storage unit 56. In the present embodiment, the gap control program is executed as one of these programs. The gap control program supports an operation of controlling the coating gap amount on the basis of measured paste viscosity, using information (graphs, tables, equations and so forth) that denote a correlation between paste viscosity $\eta$, coating gap amount H and liquid spread length L, which are stored beforehand in the storage unit 56. The gap control program can be recorded also in a computer-readable recording medium (for instance, an optical recording medium, a magnetic recording medium, a magneto-optical recording medium, a flash memory or the like) other than the storage unit 56 that is built into the gap control unit 50.

The gap control unit 50 that comprises the computing unit 54 and the storage unit 56 is connected to the viscosity measurement unit 40 that is provided halfway the transport pipe 30, and is configured in such a way so as to be capable of receiving the input of data (detection signal) on paste viscosity measured by the viscosity measurement unit 40. The viscosity measurement unit 40 detects the viscosity of the paste that is transported within the transport pipe 30, and outputs the detection signal to the gap control unit 50. The driving mechanism 52, which is likewise electrically connected to the gap control unit 50, causes the discharge nozzle 20 to move in a predetermined direction (left to right direction in FIG. 5), on the basis of a driving signal from the gap control unit 50. The size (coating gap amount) H of the clearance between the discharge nozzle 20 and the collector 10 is regulated as a result.

The gap control unit 50 controls the coating gap amount so as to a target liquid spread in the coating width, while under constant monitoring of the paste viscosity measured by the viscosity measurement unit 40. Specifically, the gap control unit 50 calculates a coating gap amount $H_0$ for obtaining a target liquid spread length $L_0$ on the basis of the paste viscosity obtained according to the detection signal from the viscosity measurement unit 40, and on the basis of information, stored beforehand in the storage unit 56, relating to a correlation between the paste viscosity $\eta$, the coating gap amount H and the liquid spread length L. The gap control unit 50 issues a driving signal to the driving mechanism 52 so as to achieve the calculated coating gap amount $H_0$, and the discharge nozzle 20 is displaced, to regulate thereby the coating gap amount H.

The paste viscosity, obtained on the basis of the detection signal from the viscosity measurement unit 40, fluctuates accompanying fluctuation of the viscosity $\eta$ of the paste during the operation of the apparatus. In this case, the gap control unit 50 calculates the coating gap amount ($H_0 \to H_1$) to be modified on the basis the paste viscosity $\eta$ after fluctuation and on the basis of the information, stored beforehand in the storage unit, denoting a correlation between the paste viscosity $\eta$, the coating gap amount H and the liquid spread length L. The gap control unit 50 issues a driving signal to the driving mechanism 52 so as to achieve the calculated coating gap amount $H_1$, and the discharge nozzle 20 is displaced, to regulate thereby the coating gap amount H. Thus, the gap control unit 50 can modify the coating gap amount in such a way so as to achieve the target liquid spread length $L_0$, while under constant monitoring of the paste viscosity measured by the viscosity measurement unit 40.

The information, stored beforehand in the storage unit 56, denoting a correlation between the paste viscosity $\eta$, the coating gap amount H and the liquid spread length L is, for instance, a graph that denotes a correlation between the paste viscosity $\eta$, the coating gap amount H and the liquid spread length L. For instance, the graph that denotes a correlation between the paste viscosity $\eta$, the coating gap amount H and the liquid spread length L is worked out beforehand based on data accumulated due to a number of data sampling, such that the coating gap amount H for obtaining the target liquid spread length L can be calculated from the paste viscosity $\eta$ measured by the viscosity measurement unit 40, on the basis of the graph that denotes the abovementioned correlation.

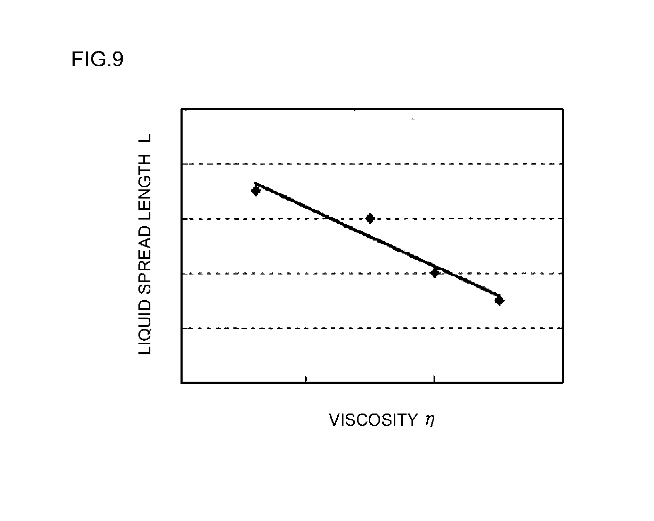

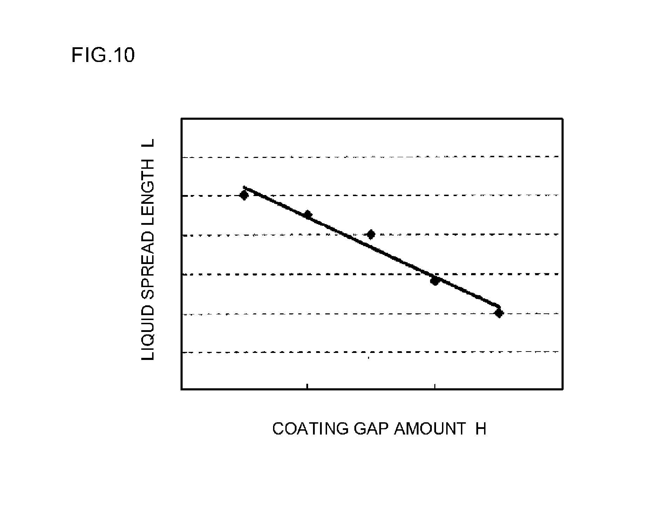

FIG. 9 and FIG. 10 illustrate respective examples of graphs that denote the abovementioned correlation. FIG. 9 is a graph illustrating the relationship between the paste viscosity $\eta$ and the liquid spread length L in a case where the coating gap amount H is set to be constant; in the graph, the abscissa axis represents the paste viscosity $\eta$, and the ordinate axis represents the liquid spread length L. As illustrated in FIG. 9, the relationship between the paste viscosity $\eta$ and the liquid spread length L is such that the greater the paste viscosity $\eta$, the smaller the liquid spread length L is, and the smaller the paste viscosity $\eta$, the larger the liquid spread length L is. FIG. 10 is a graph illustrating the relationship between the coating gap amount H and the liquid spread length L in a case where the paste viscosity $\eta$ is set to be constant, wherein the abscissa axis represents the coating gap amount H and the ordinate axis represents the liquid spread length L. As illustrated in FIG. 10, the relationship between the coating gap amount H and the liquid spread length L is such that the wider the coating gap amount H, the smaller the liquid spread length L is, and the narrower the coating gap amount H, the larger the liquid spread length L is.

The gap control unit 50 determines the coating gap amount H for obtaining the target liquid spread length L, from the paste viscosity $\eta$ measured by the viscosity measurement unit 40, on the basis of graphs, such as those illustrated in FIG. 9 and FIG. 10, that denote a correlation between the paste viscosity $\eta$, the coating gap amount H and the liquid spread length L as obtained from accumulation of actual data. A graph denoting a correlation between the paste viscosity $\eta$ and the coating gap amount H, of a case where the liquid spread length L is set to be constant (target value), may be worked out beforehand, such that the coating gap amount H for obtaining the target liquid spread length value L is determined from the paste viscosity $\eta$ measured by the viscosity measurement unit 40, on the basis of the graph that denotes the abovementioned correlation.

Alternatively, the information, stored beforehand in the storage unit 56, denoting a correlation between the paste viscosity $\eta$, the coating gap amount H and the liquid spread length L may be, for instance, an equation that denotes a correlation between the paste viscosity $\eta$, the coating gap amount H and the liquid spread length L. For instance, an equation that denotes a correlation between the paste viscosity $\eta$, the coating gap amount H and the liquid spread length L may be worked out beforehand on the basis of a flow model of die coating, such that the coating gap amount H for obtaining the target liquid spread length L can be calculated from the paste viscosity $\eta$ measured by the viscosity measurement unit 40, on the basis of the equation that denotes the abovementioned correlation.

A more detailed explanation follows next on an instance where the coating gap amount H for obtaining the target liquid spread length L is calculated, from the paste viscosity $\eta$ measured by the viscosity measurement unit 40, on the basis of an equation that denotes a correlation between the paste viscosity $\eta$, the coating gap amount H and the liquid spread length L; however, the present invention is not meant to be limited to the configuration in such an instance.

In the present embodiment, the three transport sites 32A, 32B, 32C having mutually dissimilar inner diameters so as to yield mutually dissimilar paste shear rates are provided in the transport pipe 30 that transports the paste up to the discharge nozzle 20, as illustrated in FIG. 5 and FIG. 6. The viscosity measurement unit 40 is configured so as to enable measurement of the viscosity of the paste at the shear rates in the three respective transport sites 32A, 32B, 32C, by way of the viscometers (herein, vibratory viscometers) 44A, 44B, 44C that are respectively disposed at the transport sites 32A, 32B, 32C.

The gap control unit 50 is connected to the viscometers 44A, 44B, 44C, and is configured in such a way so as to be capable of receiving input of data (detection signal) on the paste viscosity measured by the viscometers. The viscometers 44A, 44B, 44C detect the viscosity of the paste, at a respective shear rate, at the transport sites 32A, 32B, 32C, and output the abovementioned detection signal to the gap control unit 50.

The gap control unit 50 controls the coating gap amount in such a way so as to achieve a target liquid spread in the coating width, while under constant monitoring of the paste viscosity measured by the viscometers 44A, 44B, 44C. In the present embodiment, the gap control unit 50 works out a power approximation curve from the viscosity of the paste measured at the various shear rates of the transport sites 32A, 32B, 32C, and extracts the values of zero shear viscosity $\eta_0$ and viscosity index n from the equation below.
[Math. 3]

$$\eta = \eta_0\,\gamma^{(n-1)} \quad \cdots \quad (1)$$

$\eta$: paste viscosity
$\eta_0$: zero shear viscosity
n: viscosity index
$\gamma$: shear rate

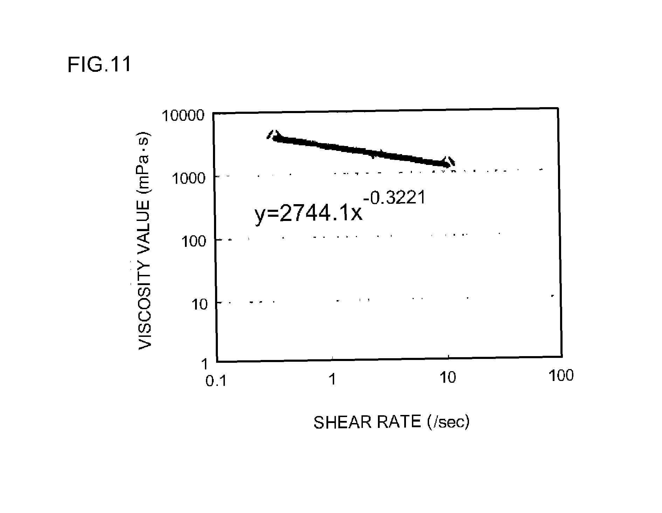

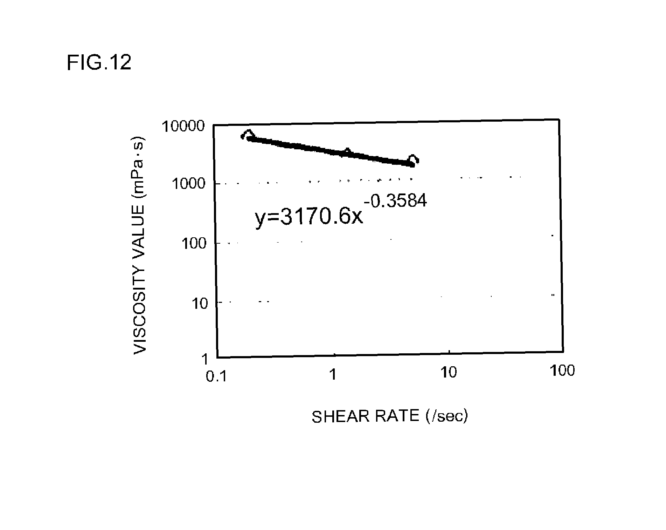

That is, when an ordinary exponential-law model (shear stress $\tau=\eta_0\gamma^n$) is used in a case where the battery material paste is non-Newtonian, the paste viscosity (apparent viscosity) $\eta$ varies depending on the shear rate $\gamma$, as given by Expression (1) above. In this case, the values of the zero shear viscosity $\eta_0$ and viscosity index n can be calculated by plotting the paste viscosity $\eta$ measured by the three viscometers 44A, 44B, 44C against the shear rate $\gamma$, working out a power approximation curve ($Y=aX^b$) from this plot, and extracting the values of the coefficients a and b. FIG. 11 and FIG. 12 are graphs illustrating a relationship between viscosity and shear rate as actually measured. In the figures, the X-axis represents the shear rate and the Y-axis represents the paste viscosity (viscosity value). The X-axis and Y-axis take the form of logarithmic plots. A power approximation curve ($Y=aX^b$) is worked out from each of these plots, and the coefficients a and b are extracted, to enable thereby calculating the values of the zero shear viscosity $\eta_0$ and the viscosity index n. In the example of FIG. 11, the zero shear viscosity $\eta_0$ is 2744.1, and the viscosity index n is -0.3221+1=0.6779. In the example of FIG. 12, the zero shear viscosity $\eta_0$ is 3170.6, and the viscosity index n is -0.3564+1=0.6436.

Once the values of zero shear viscosity $\eta_0$ and the viscosity index n are extracted, the gap control unit 50 determines next the coating gap amount (size of the clearance between the discharge nozzle and the collector) H, from the extracted values of the zero shear viscosity $\eta_0$ and the viscosity index n, on the basis of Expression (2) below.
[Math. 4]

$$L = \frac{H \cdot \Delta P}{2\,\eta_0}\left(\frac{n}{2\,n+1}\cdot\frac{H}{u}\right)^n \quad \cdots \quad (2)$$

In the equation:

$\eta_0$: zero shear viscosity
n: viscosity index
L: liquid spread length in coating width
H: coating gap amount
$\Delta P$: lip section pressure (constant)
u: travel speed of the collector (constant)

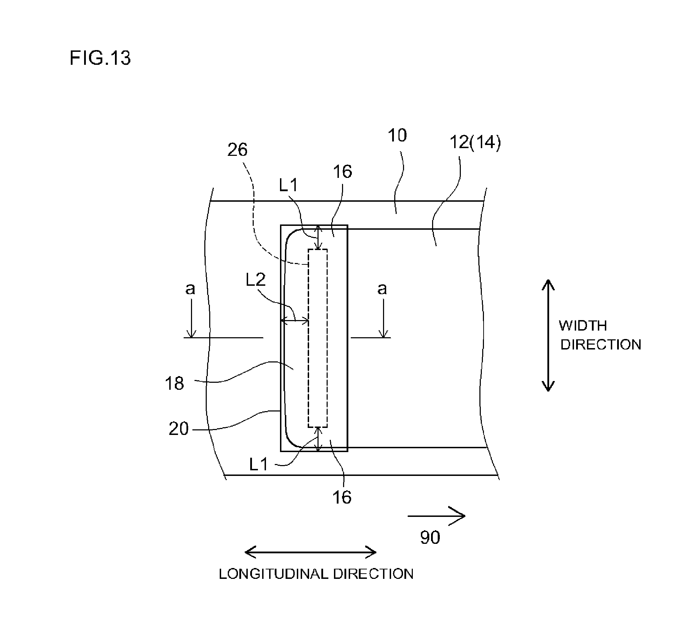

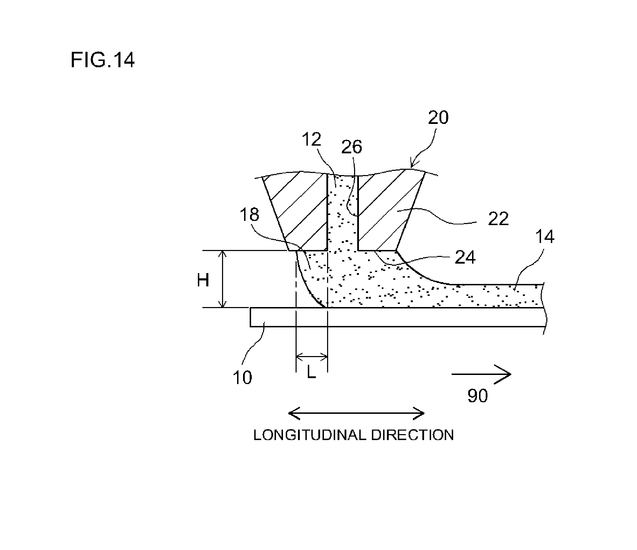

The equation in Expression (2) is obtained based on an analysis model of die coating illustrated in FIG. 13 to FIG. 15. FIG. 13 is a top-view diagram schematically illustrating a positional relationship between the discharge nozzle 20, the collector 10, and the coating film 14 (paste 12), and FIG. 14 is a cross-sectional diagram illustrating a cross-section a-a of FIG. 13. The dimensional relationships in the figure (length, width, thickness and so forth) do not reflect actual dimensional relationships.
As illustrated schematically in FIG. 13, when the paste 12 is discharged through the lip opening 26 onto the collector 10, as the latter travels in the direction of the arrow 90, the paste 12 that is discharged through the lip opening 26 flows outward, in the width direction of the lip opening 26, the liquid spread 16 arises in the lip width direction. The paste 12 discharged through the lip opening 26 flows also towards the lip inlet side (upstream of the collector 10 in the travel direction 90), giving rise to a lip inlet liquid spread 18. A liquid length L2 of the lip inlet liquid spread 18 is substantially the same as the liquid length L1 of the liquid spread 16 in the lip width direction. Therefore, a model analysis was performed on the liquid length L2 of the lip inlet liquid spread 18.

Assuming two-dimensional isothermal flow sandwiched between parallel plates (between the parallel plates of the tip of the die lip 24 and the collector 10), with negligible surface tension, at a die lip section illustrated in FIG. 14, the flow at the tip of the die lip 24 is grasped as a combination of flows between parallel plates. Flow between fixed parallel plates is assumed to be pressure flow (Poiseuille flow), and flow between a fixed parallel plate and a moving one is assumed be shear flow (Couette flow).

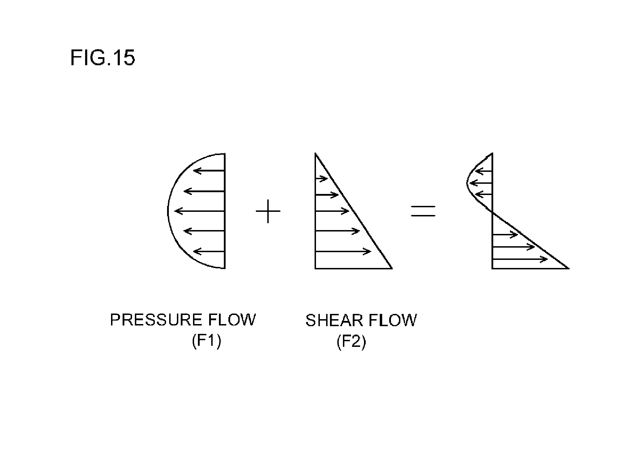

Pressure flow F1, as illustrated in FIG. 15, is flow generated as a result of a pressure gradient between fixed parallel plates, such that a lip inlet flow rate q1 of the pressure flow is given by Expression (3) below, wherein $\eta_0$ denotes the zero shear viscosity, n denotes the viscosity index, H denotes the coating gap amount, L denotes the liquid length of the lip inlet liquid spread, and $\Delta P$ denotes the lip section pressure (gauge pressure acting on the liquid between the lip opening and the collector).

[Math. 5]

$$q1 = H^2 \left( \frac{n}{2(2n+1)} \right) \left( \frac{H \cdot \Delta P}{2\eta_0 L} \right)^{\frac{1}{n}} \quad \cdots \quad (3)$$

In the equation:

$\eta_0$: zero shear viscosity (mPa·s)
n: viscosity index
H: coating gap amount (m)
L: lip inlet liquid spread length (m)
$\Delta P$: lip section pressure (Pa)

In the equation, $\Delta P$ is the gauge pressure that acts on the fluid between the lip opening and the collector. The gauge pressure is an arbitrary constant that is determined by the coating condition. This gauge pressure can be grasped, for instance, through measurement of the pressure that acts on the liquid, by attaching a pressure sensor between the lip opening 26 and the collector 10.

Shear flow F2 is flow that arises through movement of the collector at speed u, as illustrated in FIG. 15; the lip inlet flow rate q2 of the shear flow is given by Expression (4), where H is the coating gap amount and u is the travel speed of the collector.

[Math. 6]

$$q2 = \left( \frac{H \cdot u}{2} \right) \quad \cdots \quad (4)$$

In the equation:

H: coating gap amount (m)
u: travel speed of the collector (m/sec)

In the equation, u is the travel speed of the collector 10, and is an arbitrary constant that is determined also by the coating conditions.

In the present embodiment, total flow is arrested stably, and hence, the total flow rate Q=-q1+q2 of pressure flow and shear flow is zero in a balanced state, and there holds the relationship in Expression (5) below. The equation in Expression (2) described above is derived by rearranging Expression (5) using the liquid length L of the lip inlet liquid spread. In Expression (2), the lip section pressure $\Delta P$ and the travel speed u of the collector are constants determined by the coating condition. Therefore, the coating gap amount H for obtaining the target liquid length L of the liquid spread can be calculated, using the equation in Expression (2), by grasping the values of the zero shear viscosity $\eta_0$ and the viscosity index n.

[Math. 7]

$$Q = -H^2 \left( \frac{n}{2 \ (2n+1)} \right) \left( \frac{H \cdot \Delta P}{2 \ \eta_0 L} \right)^{\frac{1}{n}} + \left( \frac{H \cdot u}{2} \right) = 0 \quad \cdots \ (5)$$

Specifically, the gap control unit 50 works out a power approximation curve from the viscosity of the paste measured at the various shear rates of the transport sites 32A, 32B, 32C, and extracts the values of the zero shear viscosity $\eta_0$ and the viscosity index n from Expression (1) described above. The coating gap amount $H_0$ for obtaining the target liquid spread length $L_0$ is calculated, using the equation of Expression (2) described above, from the extracted values of the zero shear viscosity $\eta_0$ and the viscosity index n. The gap control unit 50 issues a driving signal to the driving mechanism 52 so as to achieve the calculated coating gap amount $H_0$, and the discharge nozzle 20 is displaced, to regulate thereby the coating gap amount H.

If the viscosity of the paste fluctuates during the operation of the apparatus, the zero shear viscosity $\eta_0$ and the viscosity index n fluctuate accordingly as well. In such a case, the gap control unit 50 calculates the coating gap amount ($H_0 \rightarrow H_1$) to be modified on the basis of the equation of Expression (2) described above, from the values of the zero shear viscosity $\eta_0$ and the viscosity index n after fluctuation. The gap control unit 50 issues a driving signal to the driving mechanism 52 so as to achieve the calculated coating gap amount $H_1$, and the discharge nozzle 20 is displaced, to regulate thereby the coating gap amount H.

In the present embodiment, the viscosity of the paste that is supplied to the discharge nozzle (die head) 20 is grasped constantly on-line, even if the viscosity of the paste fluctuates during the operation of the apparatus. Therefore, the coating gap amount $H_1$ for obtaining the liquid length $L_0$ of liquid spread of the target coating width is calculated by tracking changes in viscosity in accordance with the grasped viscosity. As a result, the coating gap amount H for obtaining the target liquid length $L_0$ of liquid spread in the coating width is properly modified as a result.

In the present configuration, thus, the coating gap amount for obtaining the liquid spread length L0 of the target coating width is properly adjusted on the basis of the equation of Expression (2) described above, while under constant monitoring of the viscosity of the paste during the operation of the apparatus. As a result, the paste can be properly applied by varying the coating gap amount H in such a way so as to achieve the liquid length $L_0$ of liquid spread of the target coating width, even if the viscosity of the paste fluctuates during the operation of the apparatus. The present embodiment, therefore, allows forming a coating film of uniform width on the collector 10, even if paste viscosity fluctuates during the operation of the apparatus.

In a case where the shear rate of the paste that is transported within the transport pipe is caused to vary and paste viscosity is measured for each rate, as described above, then the transport pipes 32A, 32B, 32C that elicit changes in the shear rate of the paste are preferably disposed such that the inner diameter thereof becomes sequentially smaller downstream, as illustrated in FIG. 6. In this case, the inner diameter of the transport pipe 32A furthest upstream is appropriately 2 times or more, preferably 5 times or more, and most preferably 10 times of more, the inner diameter of the transport pipe 32C that is furthest downstream. The inner diameter of the second transport pipe 32B from the upstream side (i.e. the midmost pipe) is appropriately 1.5 times or more, preferably 2.5 times or more, and particularly preferably 5 times or more the inner diameter of the transport pipe 32C furthest downstream. By virtue of such pipe layout, the inner flow rate is caused to vary stepwise, and the viscosity of the paste is measured at each rate; as a result, it becomes possible to extract, more accurately, the zero shear viscosity $\eta_0$ and the viscosity index n, and to form a coating film of more uniform width (with better precision). The temperature of the paste may be measured by attaching a temperature sensor to the transport pipe 30, and by correcting the viscosity for changes in temperature. Doing so allows forming a coating film of more uniform width (with better precision).

The coating apparatus 100 described above can be used in a process for producing an electrode for secondary batteries that is a constituent element of a wound electrode body of a battery, for instance a lithium secondary battery, the electrode for secondary batteries being provided with an elongated collector, and an electrode layer that is formed, in the longitudinal direction, on the elongated collector.

The method for producing the electrode for secondary batteries involves coating (coating process) onto the elongated collector 10, in the longitudinal direction thereof, an electrode material paste 12 for forming an electrode layer, out of a predetermined discharge nozzle 20, as illustrated in FIG. 5, and, although not shown, drying the coating film 14 applied in the longitudinal direction, to form thereby an electrode on the collector 10, in the longitudinal direction (process). The coating process is performed in accordance with a coating method (coating apparatus 100) according to the present embodiment.

One or more types of materials used in conventional lithium secondary batteries can be used, without particular limitations, as the active materials that are comprised in the electrode material paste 12 that is used in the method for producing a electrode for secondary batteries (herein, lithium secondary batteries) according to an embodiment of the present invention. Examples of negative electrode active materials include, for instance, carbon-based materials such as graphite carbon, amorphous carbon or the like, as well as lithium-transition metal complex oxides (for instance, lithium-titanium complex oxides), lithium-transition metal complex nitrides and the like. Examples of positive electrode active materials include, for instance, oxides (lithium-transition metal oxides) that comprise lithium and a transition metal element as constituent metal elements, for instance lithium nickel oxide ($LiNiO_2$), lithium cobalt oxide ($LiCoO_2$) and lithium manganese oxide ($LiMn_2O_4$).

The electrode material paste 12 can contain, as the case may require, one or more types of materials that can be used as constituent components in active material layers of ordinary lithium secondary batteries. Binders are one example of such materials. Examples of the binder include, for instance, styrene-butadiene rubber (SBR), carboxymethyl cellulose (CMC), polytetrafluoroethylene (PTFE), polyethylene (PE), polyacrylic acid (PZZ) or the like. A resin composition of polyvinylidene fluoride (PVDF) or the like may also be used.

Examples of the solvent in which the active materials can be dispersed or dissolved include, for instance, an organic solvent such as N-methylpyrrolidone (NMP), pyrrolidone, methyl ethyl ketone, methyl isobutyl ketone, cyclohexanone, toluene, dimethylformamide, dimethylacetamide or the like, as well as combinations of two or more types of the foregoing. Water or a mixed solvent having water as a main component may alternatively be used. As the solvent, other than water, that makes up the mixed solvent, there can be used one or more types, as appropriate, of organic solvents (lower alcohols, lower ketones or the like) that can be mixed uniformly with water. The content of the solvent in the composition for forming the active material layer is not particularly limited, but ranges preferably from about 30 to 70 mass% of the total paste.

The elongated collector 10 onto which the electrode material paste 12 is applied is not particularly limited, and may be identical to those of electrodes in conventional lithium secondary batteries. A copper foil, or another metal foil appropriate for negative electrodes, is suitably used in the negative electrode collector. An aluminum foil or another metal foil appropriate for positive electrodes is suitably used in the positive electrode collector.

Through the use of the above-described coating apparatus 100, the method for producing an electrode for secondary batteries according to the present embodiment allows forming an electrode layer (coating film) of uniform thickness (with good precision) on an elongated collector, even if the viscosity of the electrode material paste fluctuates during the operation of the apparatus. For instance, three coating film rows (electrode layer) are formed (stripe coating), in the longitudinal direction of one elongated collector, with a predetermined spacing between rows and with slits A to E being formed at the center of the coating films and between the coating films, as illustrated in FIG. 2. Then, six sheet-shaped electrodes are produced by cutting the elongated collector along the slits A to E. In such a case, the above-described coating apparatus 100 allows forming an electrode layer (coating film) uniformly (with good precision) on the elongated collector. In consequence, it becomes possible to properly provide the uncoated portions of the electrode layer and the cutting margin for forming the slits A to E, while yield can also be improved. As a result, it becomes possible to reduce the amount of waste, to improve efficiency, in terms, for instance, of material cost and material utilization, and to reduce material costs.

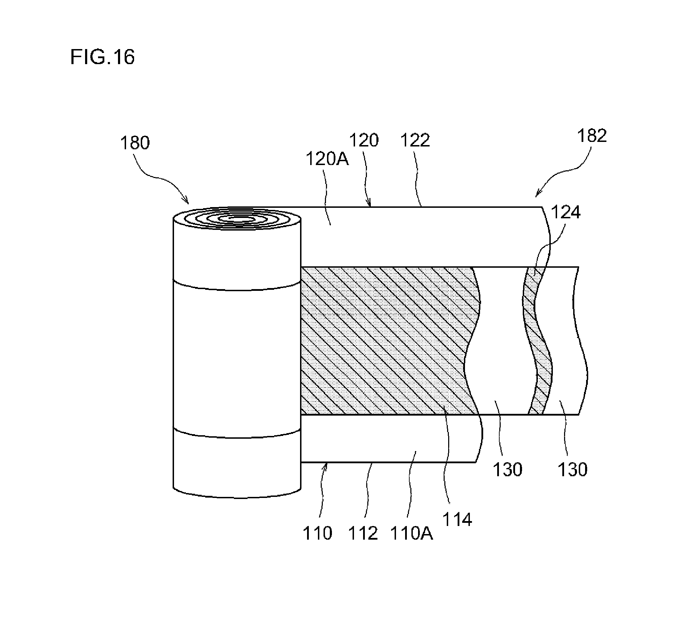

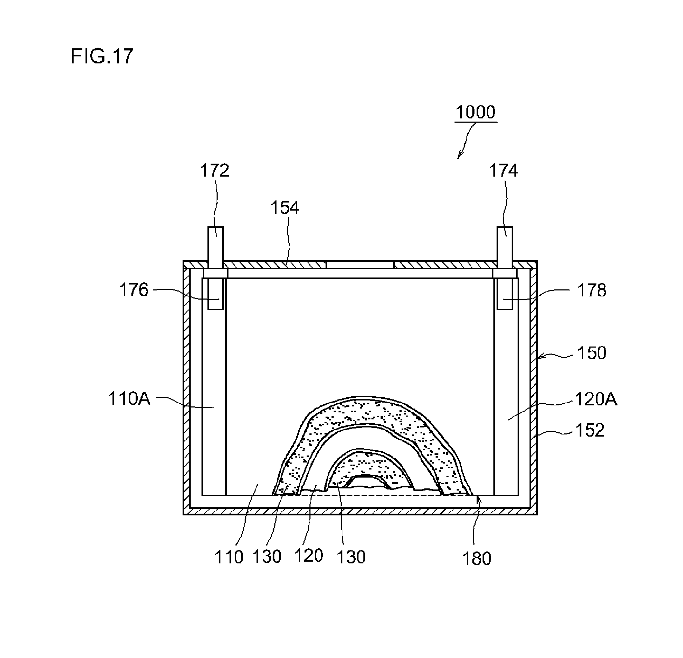

The sheet-shaped electrode for positive electrodes and the sheet-shaped electrode for negative electrodes thus produced are stacked together with two sheet-shaped separators prepared separately, as illustrated in FIG. 16, to produce a wound-type lithium electrode for secondary batteries. As illustrated in FIG. 17, the produced electrodes are accommodated in a container that is then filled with a predetermined electrolyte solution. The intended secondary battery (herein, lithium secondary battery) can be produced as a result.

An explanation follows next, with reference to the schematic diagrams illustrated in FIG. 16 and FIG. 17, on an embodiment of a lithium secondary battery constructed using a sheet-shaped electrode for positive electrodes and a sheet-shaped electrode for negative electrodes produced using the above-described coating apparatus 100.

As illustrated in FIG. 17, a lithium secondary battery 1000 according to the present embodiment is provided with a case 150 made of metal (or made of a resin or a laminate film, as appropriate). The case (outer container) 150 is provided with a case main body 152, of flat parallelepiped shape and having the top end thereof open, and with a lid body 154 that plugs that opening. On the top face (i.e. the lid body 154) of the case 150 there are provided a positive electrode terminal 172 electrically connected to a positive electrode 110 of a wound electrode body 180, and a negative electrode terminal 174 electrically connected to a negative electrode 120 of the electrode body. For instance, the elongated sheet-shaped positive electrode (positive electrode sheet) 110 and the elongated sheet-shaped negative electrode (negative electrode sheet) 120 are stacked, together with a total of two elongated sheet-shaped separators (separator sheets) 130, and are wound; the obtained wound body is then squashed from the sides, to produce a flat wound electrode body 180 that is accommodated inside the case 150.

The wound electrode body 180 is formed through winding of the sheet-shaped electrode body 182, as illustrated in FIG. 16. The sheet-shaped electrode body 182 has an elongated (strip-like) sheet structure at a stage previous to assembly of the wound electrode body 180. The sheet-shaped electrode body 182 is formed, as in typical wound electrode bodies, through stacking of the positive electrode sheet 110, the negative electrode sheet 120 and a total of two separator sheets 130.

The positive electrode sheet 110 is formed by causing a positive electrode layer (positive electrode active material layer) 114 to be deposited on both faces of an elongated sheet-shaped and foil-like positive electrode collector 112. The positive electrode layer (positive electrode active material layer) 114 is not deposited at one side edge from among the edges, in the width direction, of the sheet-shaped electrode body, such that the positive electrode collector 112 is exposed over a given width. The negative electrode sheet 120, like the positive electrode sheet 110, is formed such that a negative electrode layer (negative electrode active material layer) 124 is deposited on both faces of an elongated sheet-shaped and foil-like negative electrode collector 122. The negative electrode layer (negative electrode active material layer) 124 is not deposited at one side edge from among the edges, in the width direction, of the sheet-shaped electrode body, such that the negative electrode collector 122 is exposed over a given width.

Examples of the separator sheet 130 that is used between the positive and negative electrode sheets 110, 120 include, for instance, a separator sheet made up of a porous polyolefin resin. A separator having a three-layer structure of polypropylene (PP)/polyethylene (PE)/polypropylene (PP) may alternatively be used.

To construct the abovementioned wound electrode body, the positive electrode sheet 110 and the negative electrode sheet 120 are stacked, slightly offset from each other in the width direction, in such a manner that a positive electrode layer non-formation portion (uncoated portion) of the positive electrode sheet 110 and a negative electrode layer non-formation portion (uncoated portion) of the negative electrode sheet 120 jut beyond respective sides of the separator sheet 130, in the width direction. As a result, the electrode layer non-formation portions (uncoated portions) of the positive electrode sheet 110 and the negative electrode sheet 120 jut out of a respective winding core portion (i.e. the portion at which the positive electrode layer formation portion of the positive electrode sheet 110, the negative electrode layer formation portion of the negative electrode sheet 120 and the two separator sheets 130 are closely wound) in a transversal direction to the winding direction of the wound electrode body 180. A positive electrode lead terminal 176 and a negative electrode lead terminal 178 are respectively attached to a positive electrode-side jutting portion (i.e. uncoated portion of the positive electrode layer) 110A and a negative electrode-side jutting portion (i.e. uncoated portion of the negative electrode layer) 120A, and the positive electrode lead terminal 176 and the negative electrode lead terminal 178 are electrically connected to the above-described positive electrode terminal 172 and negative electrode terminal 174.

The wound electrode body 180 is accommodated in the main body 152, through the top-end opening of the case main body 152, and an electrolyte solution comprising an appropriate electrolyte is arranged in (poured into) the case main body 152. The electrolyte is, for instance, a lithium salt such as $LiPF_6$. For instance, an electrolyte solution can be used that is obtained by dissolving an appropriate amount (for instance, to a concentration of 1 M) of a lithium salt such as $LiPF_6$ in a nonaqueous electrolyte solution such as a mixed solvent of diethyl carbonate and ethylene carbonate (for instance, at a mass ratio of 1:1).

Thereafter, the opening is sealed for instance through welding of the lid body 154, to complete the assembly of the lithium secondary battery 1000 according to the present embodiment. The sealing process of the case 150 and the process of arranging (pouring) the electrolyte solution may be performed in accordance with methods identical to those in the production of conventional lithium secondary batteries, and are thus not a characterizing feature of the present invention. This completes the construction of the lithium secondary battery 1000 according to the present embodiment.

Preferred embodiments of the present invention have been explained above, but the present invention is not limited thereto, and, needless to say, may accommodate various modifications.

Industrial Applicability

The present invention can provide a coating apparatus that allows forming a coating film of uniform coating width.

**Claims**

1. A coating apparatus for coating an electrode material paste onto an elongated collector and thereby forming a coating film of predetermined width in a longitudinal direction of the collector,
   the coating apparatus comprising:

   a discharge nozzle that discharges said paste onto said collector, which is an object to be coated;
   a transport pipe that is connected to said discharge nozzle and transports said paste up to said discharge nozzle;
   a viscosity measurement unit that is provided halfway said transport pipe and measures the viscosity of said paste that is transported within the transport pipe; and
   a gap control unit that is electrically connected to said viscosity measurement unit and modifies a size of a clearance between said discharge nozzle and said collector on the basis of the viscosity measured by the viscosity measurement unit.

2. The coating apparatus according to claim 1, wherein said gap control unit is configured to be capable of adjusting the width of said coating film that is coated onto said collector by modifying the size of a clearance between said discharge nozzle and said collector.

3. The coating apparatus according to claim 1 or 2, wherein said viscosity measurement unit is configured to be capable of varying a shear rate of said paste that is transported within said transport pipe, and of measuring the viscosity of said paste at each shear rate.

4. The coating apparatus according to claim 3, wherein
said transport pipe is provided with at least three transport sites having mutually dissimilar inner diameters such that the shear rates of said paste are mutually dissimilar; and
said viscosity measurement unit is configured so as to measure the viscosity of said paste at the shear rate of each transport site by using respective viscometers disposed at the at least three transport sites.

5. The coating apparatus according to claim 3 or 4, wherein
said gap control unit is configured to be capable of working out a power approximation curve from the viscosity of said paste measured at said each shear rate, and extracting values of zero shear viscosity $\eta_0$ and a viscosity index n on the basis of Expression (1):
[Math. 1]

$$\eta = \eta_0 \gamma^{(n-1)} \quad \cdots \quad (1)$$

where
$\eta$: paste viscosity
$\eta_0$: zero shear viscosity
n: viscosity index
$\gamma$: shear rate

6. The coating apparatus according to claim 5, wherein
said gap control unit is configured to be capable of determining a size H of a clearance between said discharge nozzle and said collector, from said extracted values of the zero shear viscosity $\eta_0$ and the viscosity index n, on the basis of the equation of Expression (2):
[Math. 2]

$$L = \frac{H \cdot \Delta P}{2 \eta_0} \left( \frac{n}{2n+1} \cdot \frac{H}{u} \right)^n \quad \cdots \quad (2)$$

where $\eta_0$: zero shear viscosity
n: viscosity index
L: liquid spread length in coating width
H: size of the clearance between the discharge nozzle and the collector $\Delta P$: lip section pressure (constant)
u: travel speed of the collector (constant).

7. A coating method for coating an electrode material paste onto an elongated collector and thereby forming a coating film of predetermined width in a longitudinal direction of the collector,
the method comprising: arranging a viscometer halfway a transport pipe, through which said paste is transported to a discharge nozzle; and modifying a size of a clearance between said discharge nozzle and said collector on the basis of the viscosity of said paste measured by the viscometer, in order to adjust the width of said coating film that is coated onto said collector.

8. The coating method according to claim 7, wherein the shear rate of said paste transported within said transport pipe is varied, whereby the viscosity of said paste is measured at each shear rate.

9. The coating method according to claim 8, wherein at least three transport sites having mutually dissimilar inner diameters are provided halfway the transport pipe, through which said paste is transported to the discharge nozzle, such that the shear rates of said paste are mutually dissimilar, and the viscosity of said paste at the shear rate of each transport site is measured at each of the at least three transport sites.

10. The coating method according to claim 8 or 9, wherein a power approximation curve is worked out from the viscosity of said paste measured at each of the shear rates, and values of zero shear viscosity $\eta_0$ and a viscosity index n are extracted on the basis of Expression (1):
[Math. 3]

$$\eta = \eta_0 \, \gamma^{(n-1)} \quad \cdots \quad (1)$$

where
$\eta$: paste viscosity
$\eta_0$: zero shear viscosity
n: viscosity index
$\gamma$: shear rate

11. The coating method according to claim 10, wherein a size H of a clearance between said discharge nozzle and said collector is determined from said extracted values of the zero shear viscosity $\eta_0$ and the viscosity index n, on the basis of the equation of Expression (2):
[Math. 4]

$$L = \frac{H \cdot \Delta P}{2 \, \eta_0} \left( \frac{n}{2 \, n + 1} \cdot \frac{H}{u} \right)^n \quad \cdots \quad (2)$$

where
$\eta_0$: zero shear viscosity
n: viscosity index
L: liquid spread length in coating width
H: size of the clearance between the discharge nozzle and the collector $\Delta P$: lip section pressure (constant)
u: travel speed of the collector (constant).

12. A method for producing an electrode for secondary batteries that is provided with an elongated collector and an electrode layer that is formed on the elongated collector in a longitudinal direction,
the method comprising:

a step of coating an electrode material paste for forming said electrode layer onto said elongated collector, in the longitudinal direction, out of a predetermined discharge nozzle; and
a step of drying the coating film applied in the longitudinal direction and thereby forming said electrode layer on said collector, in the longitudinal direction, wherein
said coating process is performed in accordance with the coating method according to any one of claims 7 to 11.

FIG.1

LONGITUDINAL
DIRECTION

1

3

4

2

W

WIDTH DIRECTION

FIG.2

FIG.3

WIDTH DIRECTION

FIG.4

FIG.5

FIG.6

FIG. 7

FIG.7

(a)                              (b)

FIG.8

(a)  ⇨  (b)

FIG.9

FIG.10

LIQUID SPREAD LENGTH L

COATING GAP AMOUNT H

FIG.11

y=2744.1x$^{-0.3221}$

FIG.12

$y=3170.6x^{-0.3584}$

Axis labels: VISCOSITY VALUE (mPa·s) — vertical; SHEAR RATE (/sec) — horizontal

FIG.13

WIDTH DIRECTION

LONGITUDINAL DIRECTION

FIG.14

LONGITUDINAL DIRECTION

FIG.15

PRESSURE FLOW
(F1)

SHEAR FLOW
(F2)

FIG.16

FIG.17

## INTERNATIONAL SEARCH REPORT

| International application No. |
| --- |
| PCT/JP2010/069519 |

A. CLASSIFICATION OF SUBJECT MATTER
*H01M4/04*(2006.01)i, *H01M4/139*(2010.01)i

According to International Patent Classification (IPC) or to both national classification and IPC

B. FIELDS SEARCHED

Minimum documentation searched (classification system followed by classification symbols)
H01M4/04, H01M4/139

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-205679 A (Toyota Motor Corp.), 16 September 2010 (16.09.2010), entire text (Family: none) | 1-12 |
| A | JP 2009-172513 A (Toyota Motor Corp.), 06 August 2009 (06.08.2009), entire text (Family: none) | 1-12 |
| A | WO 2006/120907 A1 (Matsushita Electric Industrial Co., Ltd.), 16 November 2006 (16.11.2006), entire text & US 2009/0104344 A1 & EP 1901372 A1 & CN 101171707 A | 1-12 |

| ☒ Further documents are listed in the continuation of Box C. | ☐ See patent family annex. |
| --- | --- |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 February, 2011 (01.02.11) | 15 February, 2011 (15.02.11) |

| Name and mailing address of the ISA/ Japanese Patent Office | Authorized officer |
| --- | --- |
| Facsimile No. | Telephone No. |

Form PCT/ISA/210 (second sheet) (July 2009)

**EP 2 637 237 A1**

<table>
<tr><td colspan="2" align="center">**INTERNATIONAL SEARCH REPORT**</td><td>International application No.<br>PCT/JP2010/069519</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-229919 A  (Matsushita Electric Industrial Co., Ltd.), 24 August 2001 (24.08.2001), entire text (Family: none) | 1-12 |
| A | JP 2000-113878 A  (Matsushita Electric Industrial Co., Ltd.), 21 April 2000 (21.04.2000), entire text (Family: none) | 1-12 |
| A | JP 10-340727 A  (Matsushita Electric Industrial Co., Ltd.), 22 December 1998 (22.12.1998), entire text (Family: none) | 1-12 |

Form PCT/ISA/210 (continuation of second sheet) (July 2009)

**REFERENCES CITED IN THE DESCRIPTION**

**Patent documents cited in the description**

- JP 2009187819 A
- JP S62194441 B
- JP H06074887 B
- JP H06094593 B
- JP S64026124 B
- JP 2000348710 A
- JP 2005243581 A